# EUROPEAN PATENT APPLICATION

(11) **EP 4 692 467 A1**
(43) Date of publication of application: **11.02.2026**
(21) Application number: 24784734.6
(22) Date of filing: 21.03.2024
(51) Int. Cl.: E02F 9/20

(54) **WORK MACHINE**

(30) Priority: 05.04.2023 JP 2023061364
(71) Applicant: Hitachi Construction Machinery Co., Ltd., Tokyo 110-0015 (JP)
(72) Inventor: SHIMIZU, Juri, Tokyo 100-8280 (JP); SAITOH, Teppei, Tokyo 100-8280 (JP); SATO, Kei, Tsuchiura-shi, Ibaraki 300-0013 (JP); ITO, Hideaki, Tsuchiura-shi, Ibaraki 300-0013 (JP)
(74) Representative: MERH-IP Matias Erny Reichl Hoffmann Patentanwälte PartG mbB
(86) International application number: PCT/JP2024/010966
(87) International publication number: WO 2024/209943

(57) **Abstract**

Provided is a work machine including an operation input controller that outputs an operation signal for driving a machine body and a work device, a posture measurement controller that measures, as a time series, posture information relating to the machine body and the work device, a terrain profile measurement controller that measures, as peripheral environment information, a terrain profile shape of a periphery of the work machine, a machine body state monitoring controller that measures machine body state information indicating a state of the machine body of the work machine, and a main controller, and the main controller collects, in a data aggregation determination section, the terrain profile data saved in a terrain profile temporary storage device of the terrain profile measurement controller via a machine body control communication line, in a case in which a condition set in advance is satisfied, and stores the terrain profile data in a main storage device. As a result, in a system including the plurality of controllers, the saved data can be collected outside the work machine while the data in a large capacity is appropriately handled on the network between the controllers without imposing a load on communication of a control signal.

## Description

### Technical Field

The present invention relates to a work machine.

### Background Art

In recent years, in a work machine such as a hydraulic excavator, an automatic operation function of autonomously executing work has been under developed. In order to achieve the automatic operation function for the work machine, it is required to handle, in addition to internal information of the work machine, a large amount of data such as peripheral terrain profile information. Moreover, as the level of the function increases, the number of types of sensors to be handled increases, and hence an increase in complexity in processing is predicted. Thus, in consideration of this situation, there has been proposed to provide a controller for each function and to use plurality of controllers for constructing a processing system. Moreover, in the development of the automatic operation function, it is required to collect data handled by these plurality of controllers.

As the processing system formed of the plurality of controllers, for example, one described in Patent Document 1 is known. In Patent Document 1, in a system formed of plurality of controllers, there is described an automatic operation construction machine including a distributed controller system in which a safety and protection control controller is provided, thereby increasing a safety and protection function.

### Prior Art Document

### Patent Document

Patent Document 1: JP-H11-81392-A

### Summary of the Invention

### Problem to be Solved by the Invention

In Patent Document 1, there is employed such a configuration that the plurality of controllers are connected with one another via one system of LAN. However, it is not expected to handle a large capacity of data such as terrain profile data and hence, in a case in which machine body control data and high capacity data such as the terrain profile data are simultaneously handled, there is fear in that a communication delay and missing of the machine body control data may occur and consequently the work machine may not be operated as intended.

The present invention has been made in view of the problem described above, and has an object to provide a work machine which can collect, in a system including a plurality of controllers, saved data outside the work machine while data in a large capacity is appropriately handled on a network between the controllers without imposing a load on communication of a control signal.

### Means for Solving the Problem

The present application includes a plurality of means for solving the problem described above, as one example thereof, in a work machine including a machine body and a work device provided to the machine body, the work machine includes: an operation input controller that outputs an operation signal for driving the machine body and the work device, according to an operation state of an operation device operated by an operator; a posture measurement controller that measures, as a time series, posture information relating to the machine body and the work device on the basis of a detection result of a posture sensor; a terrain profile measurement controller that measures, as peripheral environment information, a terrain profile shape of a periphery of the work machine on the basis of a detection result of a terrain profile sensor; a machine body state monitoring controller that measures machine body state information indicating a state of the machine body of the work machine on the basis of a rotation speed of a prime mover of the work machine; and a main controller that is connected to the operation input controller, the posture measurement controller, the terrain profile measurement controller, and the machine body state monitoring controller via a machine body control communication line, the main controller includes a main storage device and a data aggregation determination section that executes aggregation processing for data to be stored in the main storage device, the terrain profile measurement controller includes a terrain profile temporary storage device that temporarily stores measured terrain profile data, and the main controller collects, in the data aggregation determination section, the terrain profile data saved in the terrain profile temporary storage device of the terrain profile measurement controller via the machine body control communication line, when a condition set in advance is satisfied, and stores the terrain profile data in the main storage device.

### Advantages of the Invention

According to the present invention, in the system formed of the plurality of controllers, the saved data can be collected outside the work machine while data in the large capacity is appropriately handled on the network between the controllers without imposing a load on communication of a control signal.

### Brief Description of the Drawings

[Fig. 1] Fig. 1 is a side view for schematically illustrating an overall configuration of a hydraulic excavator illustrated as an example of a work machine.
[FIG. 2] Fig. 2 is a function block diagram for illustrating a controller group forming control functions of the hydraulic excavator according to a first embodiment.
[Fig. 3] Fig. 3 is a flowchart for illustrating data aggregation start determination processing.
[Fig. 4] Fig. 4 is a function block diagram for illustrating the control group forming the control functions of the hydraulic excavator according to a second embodiment.
[Fig. 5] Fig. 5 is a diagram for schematically illustrating terrain profile data handled by a terrain profile data compression section.
[Fig. 6] Fig. 6 is a flowchart for illustrating a processing content of terrain profile data compression processing by the terrain profile data compression section.
[Fig. 7] Fig. 7 is a diagram for illustrating an example of the terrain profile data compression processing.
[Fig. 8] Fig. 8 is a function block diagram for illustrating the control group forming the control functions of the hydraulic excavator according to a third embodiment.
[Fig. 9] Fig. 9 is a flowchart for illustrating a processing content of data aggregation/communication timing determination processing.

### Modes for Carrying Out the Invention

A detailed description is now given of embodiments of the present invention with reference to drawings. Note that, in the present embodiments, as an example of a work machine, there is exemplified a hydraulic excavator on which an articulated front work device (work device) is mounted, but the present invention can also be applied to other work machines.

### <First Embodiment>

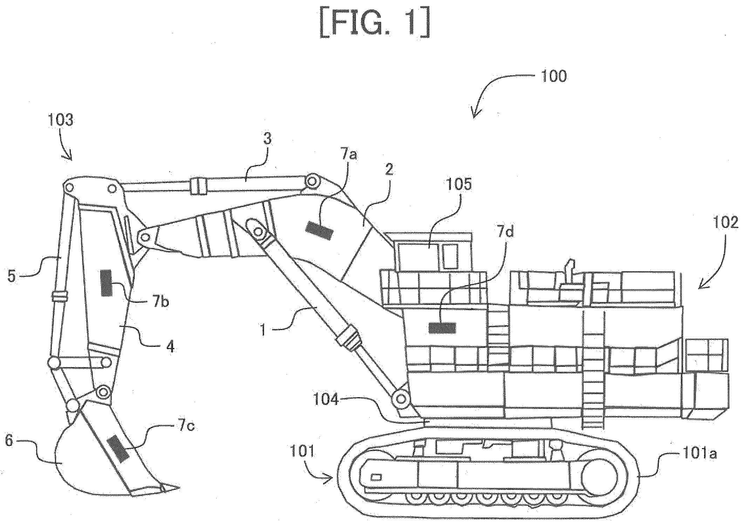

A description is now given of a first embodiment of the present invention with reference to Fig. 1 to Fig. 3.

Fig. 1 is a side view for schematically illustrated an overall configuration of the hydraulic excavator illustrated as an example of the work machine.

In Fig. 1, a hydraulic excavator 100 is roughly formed of a lower travel structure 101 provided with a travel device 101a of a crawler type, an upper swing structure 102 swingably mounted to an upper portion of the lower travel structure 101 via a swing device 104, and an articulated front work device 103 (work device) provided pivotally in up and down directions to a front portion of the upper swing structure 102. Here, the lower travel structure 101 and the upper swing structure 102 form a machine body of the hydraulic excavator 100.

The front work device 103 is formed of a boom 2 pivotally connected to the upper swing structure 102, an arm 4 pivotally connected to a distal end of the boom 2, a bucket 6 pivotally connected to a distal end of the arm 4, a boom cylinder 1 for pivotally driving the boom 2 with respect to the upper swing structure 102, an arm cylinder 3 for pivotally driving the arm 4 with respect to the boom 2, and a bucket cylinder 5 for pivotally driving the bucket 6 with respect to the arm 4. Here, each of the boom cylinder 1, the arm cylinder 3, and the bucket cylinder 5 is formed of a hydraulic single rod cylinder. The hydraulic excavator 100 is what is called a backhoe excavator, and the bucket 6 is operated so as to be pulled backward by extending the arm cylinder 3 or the bucket cylinder 5.

To the boom 2 of the front work device 103, a posture angle sensor 7a capable of measuring a posture angle of the boom 2 is provided. Similarly, to the arm 4, a posture angle sensor 7b capable of measuring a posture angle of the arm 4 and, to the bucket 6, a posture angle sensor 7c capable of measuring a posture angle of the bucket 6 are provided, respectively. Moreover, to the upper swing structure 102, a posture angle sensor 7b capable of measuring a swing angle and a posture (for example, an inclination with respect to the horizontal plane) of the upper swing structure 102 is provided. Note that, it is possible to use the posture angle sensor 7d to measure also the posture angle of the upper swing structure 102 in a case in which the hydraulic excavator 100 is stopped on an inclined surface.

A cab 105 on which an operator rides is provided to the front portion of the upper swing structure 102. In the cab 105, an operation lever 184 (operation device) for the operator to execute the operation for the hydraulic excavator 100, and the like are disposed.

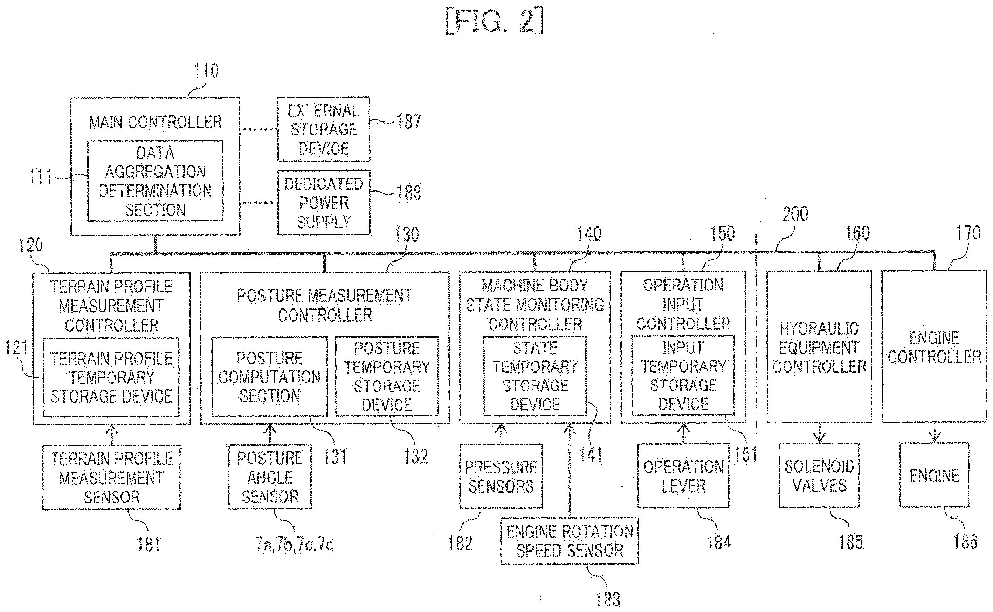

FIG. 2 is a function block diagram for illustrating a controller group forming control functions of the hydraulic excavator.

In FIG. 2, the controller group of the hydraulic excavator 100 is formed of a main controller 110, a terrain profile measurement controller 120, a posture measurement controller 130, a machine body state monitoring controller 140, an operation input controller 150, a hydraulic equipment controller 160, and an engine controller 170. The controllers 110, 120, 130, 140, 150, 160, and 170 forming the controller group are connected to one another via a machine body control communication line 200.

The main controller 110 integrally controls the controllers 120, 130, 140, 150, 160, and 170 of the controller group to control the operation of the entire hydraulic excavator 100, and, to the main controller 110, an external storage device 187 and a dedicated power supply 188 are connected.

The external storage device 187 is formed such that the connection to the main controller 110 can easily be released and the external storage device 187 is portable.

The dedicated power supply 188 supplies a power supply for the operation to each of the controllers 120, 130, 140, 150, 160, and 170 even when the engine 186 serving as the prime mover is stopped.

The terrain profile measurement controller 120 controls a terrain profile measurement sensor 181 being a sensor capable of measuring a terrain profile around the hydraulic excavator 100, manages a measurement result of the terrain profile measurement sensor 181, and includes a terrain profile temporary storage device 121.

To the terrain profile measurement controller 120, the measurement result of the terrain profile measurement sensor 181, that is, data relating to the terrain profile in the peripheral environment of the hydraulic excavator 100 is input and is saved as data relating to a time-series change in terrain profile. A data capacity of the measurement result of the terrain profile measurement sensor 401 depends on the area of the terrain measured and the resolution. For example, if the areas of the terrain measured are the same, the data capacity of the measurement result having a higher resolution is a larger capacity. Similarly, if the resolutions of the measurement results are the same, the data capacity of the measurement result in a larger work machine having a wider work range is a larger capacity.

The posture measurement controller 130 controls the posture angle sensors 7a, 7b, 7c, and 7d and measurement results of the posture angle sensors 7a, 7b, 7c, and 7d, and includes a posture computation section 131 and a posture temporary storage device 123.

To the posture measurement controller 130, posture angles of the boom 2, the arm 4, the bucket 6, and the upper swing structure 102 measured by the posture angle sensors 7a, 7b, 7c, and 7d, respectively, are input as the measurement results.

The posture computation section 131 calculates a claw tip trajectory and an angle of the bucket 6 on the basis of the measurement results of the posture angle sensors 7a, 7b, 7c, and 7d. In the posture temporary storage device 123, there is saved data relating to the claw tip trajectory and the time-series change in angle of the bucket 6 being the calculation results of the posture computation section 131.

The machine body state monitoring controller 140 includes a state temporary storage device 141.

To the machine body state monitoring controller 140, there are input measurement results of pressure sensors 182 and the measurement result of the engine rotation speed sensor 183.

The pressure sensors 182 measure various pressures of a hydraulic circuit inside the hydraulic excavator 100. Note that, the hydraulic circuit and disposition of the pressure sensors 182 in the hydraulic circuit are not illustrated.

The engine rotation speed sensor 183 measures the rotation speed of the engine 186 (prime mover).

To the state temporary storage device 141, there are saved the time-series change data on each pressure measured by the pressure sensor 182 and time-series change data on the rotation speed of the engine 186 measured by the engine rotation speed sensor 183.

The operation input controller 150 includes an input temporary storage device 142.

To the operation input controller 150, a measurement result of an operation amount of the operation lever 184 is input. The operation amount of the operation lever 184 corresponds to target values of operation speeds of the boom 2, the arm 4, the bucket 6, and the swing device 104.

In the input temporary storage device 142, data relating to a time-series change in operation amount of the operation lever 184 is saved.

The hydraulic equipment controller 160 outputs a command value for driving each of solenoid valves 185. The solenoid valves 185 are provided to the hydraulic circuit in the hydraulic excavator 100 and, according to, for example, command values from the hydraulic equipment controller 160, execute control of supply flow rates of hydraulic fluid delivered from a hydraulic pump driven by the engine 186 to the boom cylinder 1, the arm cylinder 3, the bucket cylinder 5, the swing device 104, and the travel device 101a, control of each hydraulic pump, and the like.

The engine controller 170 outputs a target rotation speed of the engine 186 as a command value.

The main controller 110 includes a data aggregation determination section 111. The main controller 110 generates the command values for the solenoid valves 185 and the engine 186 for controlling the hydraulic excavator 100, on the basis of a target operation speed of each actuator transmitted from the operation input controller 150 according to the operation amount of the operation lever 184 via the machine body control communication line 200 and the measurement results of the pressure sensors 182 and the measurement result of the engine rotation speed sensor 183 transmitted from the machine body state monitoring controller 140 via the machine body control communication line 200. The command values for the solenoid valves 185 and the engine 186 generated by the main controller 110 are transmitted to the hydraulic equipment controller 160 and the engine controller 170 via the machine body control communication line 200.

The data aggregation determination section 111 of the main controller 110 executes data aggregation start determination processing of determining whether or not to execute data aggregation processing.

The data aggregation processing is processing of aggregating the data saved in the terrain profile temporary storage device 121, the posture temporary storage device 132, the state temporary storage device 141, and the input temporary storage device 151 to the main controller 110 via the machine body control communication line 200 and saving the aggregated data in the external storage device 187.

Note that the data transmission (data collection) from each of the temporary storage devices 121, 132, 141, and 151 to the main controller 110 in the data aggregation processing is executed discretely in a unit of mesh or the like. As a result, even when transmission discontinuation due to the operation start of the hydraulic excavator 100 or the like occurs, the transmission is easily resumed. Moreover, where the data in each of the temporary storage devices 121, 132, 141, and 151 reaches a full capacity, the data is deleted in chronological order in each of the temporary storage devices 121, 132, 141, and 151. Moreover, there may be provided such a configuration that a transmission rate (%) in the data transmission from each of the temporary storage devices 121, 132, 141, and 151 to the main controller 110 is displayed on a display device in the cab 105 to present the transmission rate to the operator, thereby allowing the operator to check a situation of the progress of the data aggregation processing.

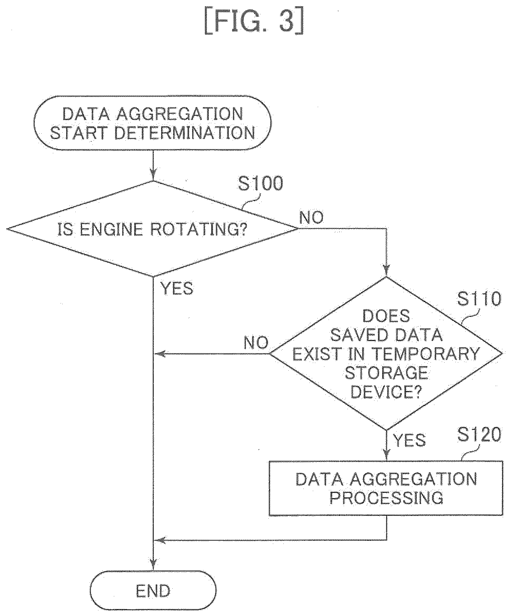

Fig. 3 is a flowchart for illustrating the data aggregation start determination processing.

In Fig. 3, the data aggregation determination section 111 first determines whether or not the engine 186 is rotating on the basis of the measurement result of the engine rotation speed sensor 183 transmitted from the machine body state monitoring controller 140 to the main controller 110 (Step S100).

When a determination result in Step S100 is YES, that is, when the engine 186 is rotating, the data aggregation determination section 111 finishes the processing.

Moreover, when the determination result in Step S100 is NO, that is, when the engine 186 is stopped, the data aggregation determination section 111 determines whether or not there exists the data saved in at least one of the terrain profile temporary storage device 121, the posture temporary storage device 132, the state temporary storage device 141, and the input temporary storage device 151 (Step S110).

When the determination result in Step S110 is NO, that is, when saved data exists in none of the terrain profile temporary storage device 121, the posture temporary storage device 132, the state temporary storage device 141, and the input temporary storage device 151, the data aggregation determination section 111 finishes the processing.

Moreover, when the determination result in Step S110 is YES, that is, when saved data exists in at least one of the terrain profile temporary storage device 121, the posture temporary storage device 132, the state temporary storage device 141, and the input temporary storage device 151, the data aggregation determination section 111 executes the data aggregation processing (Step S120) and finishes the processing.

A description is now given of effects in the present embodiment configured as described above.

For example, in the case in which there is employed such a configuration that the plurality of controllers are connected to one another via one system of LAN, if it is not expected to handle a high capacity of data such as the terrain profile data as in prior art, when machine body control data and the high capacity data such as the terrain profile data are simultaneously handled, there is fear in that a communication delay and missing of the machine body control data may occur and consequently the work machine may not be operated as intended.

In contrast, in the present embodiment, in the work machine (hydraulic excavator 100) including the machine body (lower travel structure 101 and the upper swing structure 102) and the work device (front work device 103) provided to the machine body, the work machine includes the operation input controller 150 that outputs the operation signal for driving the machine body and the work device according to the operation state of the operation device (operation lever 184) operated by the operator, the posture measurement controller 130 that measures, as the time series, the posture information relating to the machine body and the work device on the basis of the detection result of the posture sensors (posture angle sensors 7a, 7b, 7c, and 7d), the terrain profile measurement controller 120 that measures, as the peripheral environment information, the terrain profile shape of the periphery of the work machine on the basis of the detection result of the terrain profile sensor (terrain profile measurement sensor 181), the machine body state monitoring controller 140 that measures the machine body state information indicating the state of the machine body of the work machine on the basis of the rotation speed of the engine 186 serving as the prime mover of the work machine, and the main controller 110 that is connected to the operation input controller, the posture measurement controller, the terrain profile measurement controller, and the machine body state monitoring controller via the machine body control communication line 200, the main controller includes the main storage device (external storage device 187) and the data aggregation determination section 111 that executes the aggregation processing for the data to be stored in the main storage device, the terrain profile measurement controller includes the terrain profile temporary storage device 121 that temporarily stores the measured terrain profile data, and the main controller collects, in the data aggregation determination section, the terrain profile data saved in the terrain profile temporary storage device of the terrain profile measurement controller via the machine body control communication line when the condition set in advance is satisfied and causes the terrain profile data to be stored in the main storage device. As a result, in the system formed of the plurality of controllers, the saved data can be collected outside the work machine while the data in the large capacity is appropriately handled on the network between the controllers without imposing a load on the communication of the control signal.

That is, the present embodiment is configured such that the data aggregation processing is executed by the data aggregation determination section 111 when, for example, the hydraulic excavator 100 is not operating. Thus, during the operation of the hydraulic excavator 100, data in a large capacity such as the measurement result of the terrain profile measurement sensor 181 does not flow through the machine body control communication line 200, and hence the control signal can be communicated at a stable cycle.

Moreover, in the present embodiment, the external storage device 187 is configured to be detachable from the main controller 110, and hence it is possible to collect the operation information relating to the hydraulic excavator 100 including the terrain profile data in a short time required to replace the external storage device 187. That is, for example, it is possible to collect the operation information and the peripheral terrain profile data relating to the hydraulic excavator 100 by the operator collecting the external storage device 187 at the end of work and getting off the hydraulic excavator 100.

Moreover, in the present embodiment, there is provided the configuration in which the dedicated power supply 188 is included, hence the stable power supply is supplied even in the situation in which the engine 186 is stopped, that is, even in the situation in which the hydraulic excavator 100 is not generating electric power, and the data aggregation processing can be executed.

Moreover, in the present embodiment, there is provided the configuration in which the terrain profile temporary storage device 121 which temporarily saves the large-capacity data such as the terrain profile data is included, and the large-capacity data is transmitted to the main controller 110 at a timing at which a communication amount of the machine body control communication line 200 is small, and hence the data can be aggregated without necessity for adding a new network.

Note that, in the present embodiment, there is provided the configuration in which the operation situation of the hydraulic excavator 100 is determined according to whether or not the engine 186 is rotating, but the configuration is not limited to this example and there may be provided such a configuration that the operation situation of the hydraulic excavator 100 may be determined according to, for example, states of the operation lever 184 (operation device), a safety release lever (safety device, not illustrated), and a fuel filling opening and the like. Specifically, there may be provided such a configuration that the data aggregation processing is executed in a state in which the operation lever 184 is not being operated (a state in which the operation signal is not output), in a state in which the safety release lever has been operated to an OFF state and hence the operation is restricted, or in a case in which the fuel filling opening is in an open state.

Moreover, in the present embodiment, there is provided the configuration that the measurement results other than that of the terrain profile measurement sensor 181 are also saved in the temporary storage device of each of the controllers 130, 140, and 150 and then are aggregated to the main controller, but the configuration is not limited to this example and there may be provided such a configuration that only data relatively small in data capacity is directly saved in the external storage device 187 without waiting for the data aggregation processing by the data aggregation determination section 111, for example, only when the hydraulic excavator 100 is operating and a margin exists in the communication amount of the machine body control communication line 200.

### <Second Embodiment>

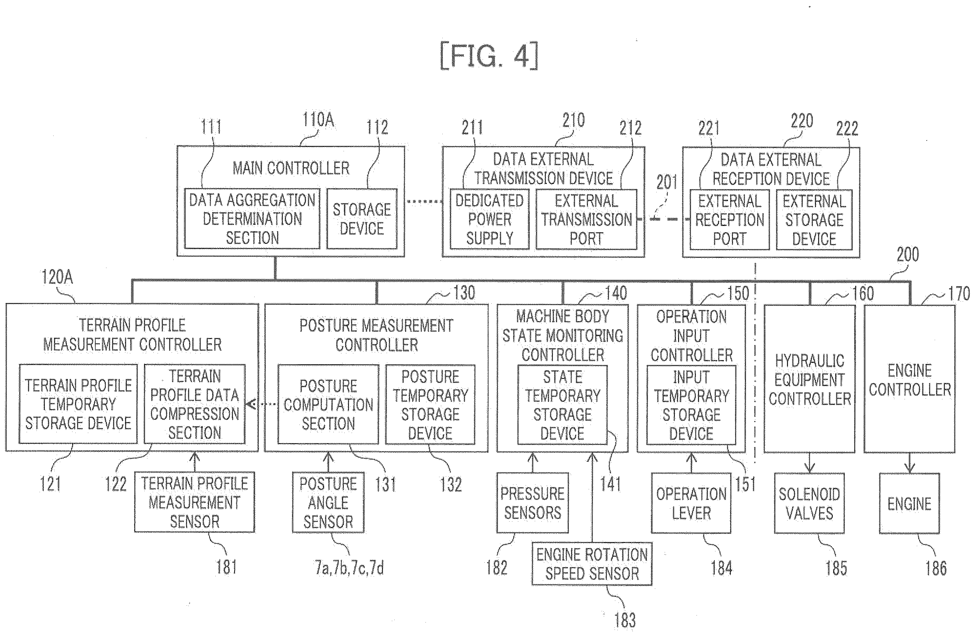

A description is now given of a second embodiment of the present invention with reference to Fig. 4 to Fig. 7.

The present embodiment stores the data aggregated in a storage device of the main controller in place of the external storage device. In the present embodiment, members that are similar to their counterparts in the first embodiment are given the same reference characters and a description thereof is appropriately omitted.

FIG. 4 is a function block diagram for illustrating the controller group forming the control functions of the hydraulic excavator according to the present embodiment.

In FIG. 4, the controller group of the hydraulic excavator 100 is formed of a main controller 110A, a terrain profile measurement controller 120A, the posture measurement controller 130, the machine body state monitoring controller 140, the operation input controller 150, the hydraulic equipment controller 160, and the engine controller 170. The controllers 110A, 120A, 130, 140, 150, 160, and 170 forming the controller group are connected to one another via the machine body control communication line 200.

The main controller 110A includes a data aggregation determination section 111 and a storage device 112. In the present embodiment, the data is aggregated in the storage device 112 in the data aggregation processing.

To the main controller 110A, a data external transmission device 210 is connected.

The data external transmission device 210 includes a dedicated power supply 211 and an external transmission port 212.

The dedicated power supply 211 supplies, even when the engine 186 is stopped, the electric power to the main controller 110A, the terrain profile measurement controller 120A, the posture measurement controller 130, the machine body state monitoring controller 140, the operation input controller 150, the hydraulic equipment controller 160, and the engine controller 170.

The data external reception device 220 includes an external reception port 221 and an external storage device 222.

The external transmission port 212 of the data external transmission device 210 and the external reception port 221 of the data external reception device 220 are connected to each other via the data external transmission line 201. When the data external reception device 220 is connected via the data external transmission line 201, the data external transmission device 210 reads out the data saved in the storage device 112 of the main controller 110A, transmits the read data to the data external reception device 220, and saves the read data in the external storage device 222.

The terrain profile measurement controller 120A includes a terrain profile temporary storage device 121 and the terrain profile data compression section 122.

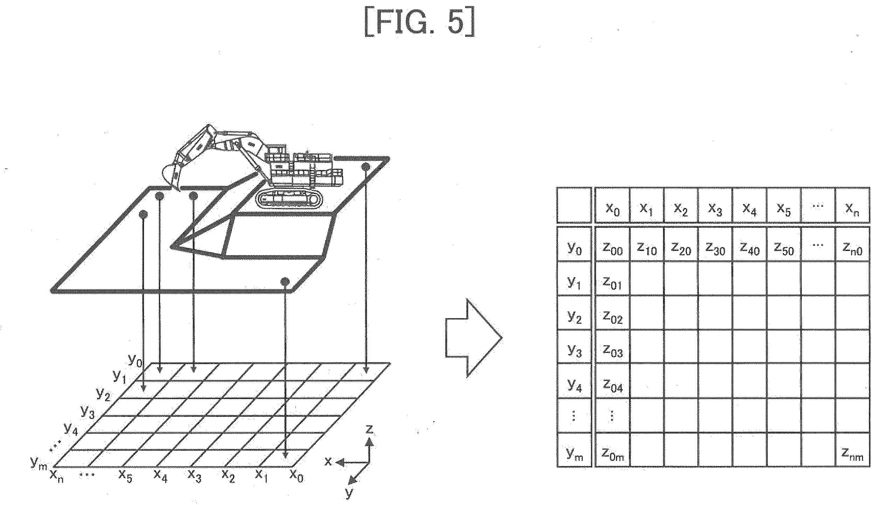

Fig. 5 is a diagram for schematically illustrating terrain profile data handled by the terrain profile data compression section.

As illustrated in Fig. 5, in the terrain profile data compression section 122, a continuous three-dimensional terrain profile measured by the terrain profile measurement sensor 181 is handled as an n×m terrain profile matrix data obtained by aggregating height information in each cell on an XY plane partitioned at any predetermined resolution.

The terrain profile data compression section 122 updates the terrain profile matrix data on the basis of the claw tip trajectory of the bucket 6 computed by the posture computation section 131 of the posture measurement controller 130.

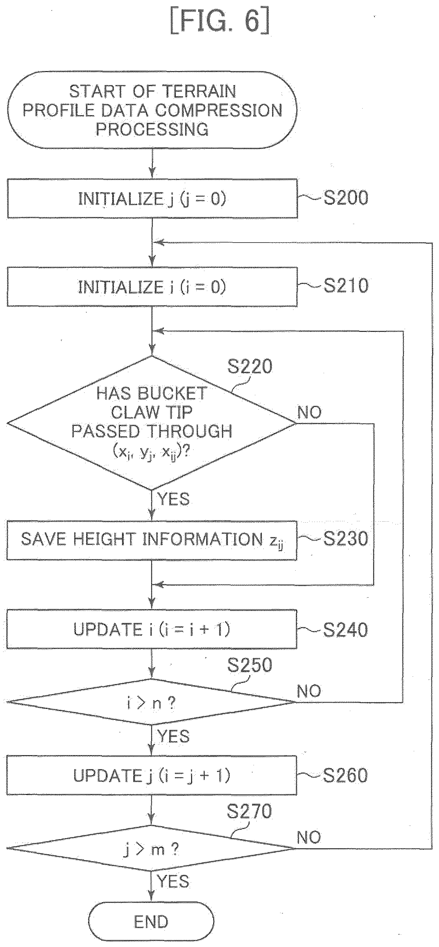

FIG. 6 is a flowchart for illustrating a processing content of terrain profile data compression processing by the terrain profile data compression section.

In Fig. 6, the terrain profile data compression section 122 first initializes a counter variable "j" to j=0 (Step S200) and initializes a counter variable "i" to i=0 (Step S210).

After that, the terrain profile data compression section 122 determines whether or not the claw tip of the bucket 6 has passed through a specific cell (for example, a cell (xᵢ, yᵢ, xᵢⱼ)) of the terrain profile matrix data measured in advance, in other words, whether or not excavation has been executed (Step S220).

When a determination result in Step S220 is YES, that is, when the terrain profile data compression section 122 determines that the claw tip of the bucket 6 has interfered with the specific cell, the terrain profile data compression section 122 updates the height information (xᵢⱼ) stored in this cell.

Moreover, when the determination result in Step S220 is NO, or when the processing in Step S230 has been finished, the terrain profile data compression section 122 updates the counter variable "i" to i=i+1 (Step S240) and then determines whether or not i>n, that is, whether or not the processing has been executed for all of the cells in the terrain profile matrix data indicated by the current counter variable "j" (Step S250). When a determination result in Step S250 is NO, the processing in Step S200 to Step S240 is repeated until the determination result becomes YES.

Moreover, when the determination result in Step S250 is YES, the terrain profile data compression section 122 updates the counter variable "j" to j=j+1 (Step S260), and then determines whether or not j>m, that is, the processing in all of the cells in the terrain profile data has been executed (Step S270). When a determination result in Step S270 is NO, the processing in Step S210 to S260 is repeated until the determination result becomes YES.

Moreover, when a determination result in Step S270 is YES, the terrain profile data compression section 122 finishes the processing.

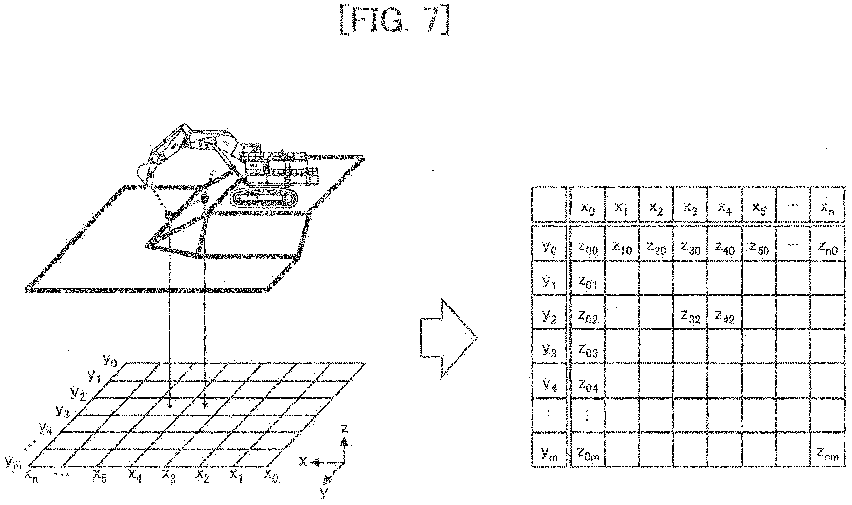

Fig. 7 is diagram for illustrating an example of the terrain profile data compression processing.

In Fig. 7, the areas in which the trajectory of the claw tip of the bucket 6 interferes with the terrain profile correspond to cells (x₃, y₂) and (x₄, y₂). Thus, the update processing is applied to information z₃₂ and z₄₂ in the height direction of the cells.

Moreover, in the terrain profile data compression processing, the capacity of the terrain profile data can further be compressed by not saving the entire terrain profile matrix data each time in the terrain profile temporary storage device 121, but saving information relating to only the updated cells.

Other configurations are similar to the configurations of the first embodiment.

Also in the present embodiment configured as described above, there can be provided effects similar to those in the first embodiment.

Moreover, in the present embodiment, the data external reception device 220 including the external storage device 222 is configured to be connectable via the data external transmission line 201, and hence it is possible to stably collect the data in a large capacity at a high speed at any timing.

Moreover, in the present embodiment, it is possible to use the terrain profile data compression section 122 to compress the three-dimensional terrain profile data to the n×m terrain profile matrix data, thereby achieving a small capacity of the data to be handled. Note that, the resolution of the terrain profile matrix data is set according to a capacity limit of the data which the temporary storage device 121 can save, a limit in terms of the communication, a use purpose of the collected terrain profile data, and the like, thereby being able to more appropriately collect the terrain profile data.

### <Third Embodiment>

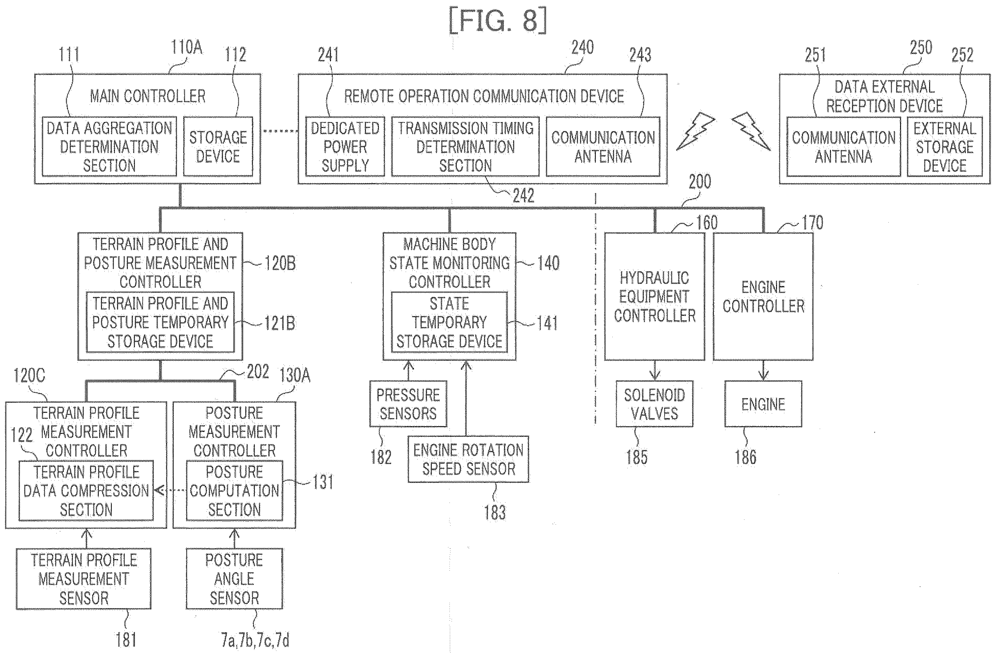

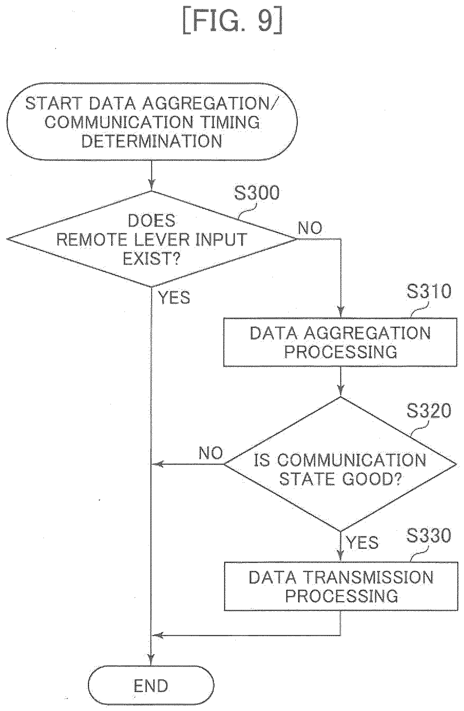

A description is now given of a third embodiment of the present invention with reference to Fig. 8 and Fig. 9.

The present embodiment describes a case in which the data is collected through wireless communication during remote operation. In the present embodiment, members that are similar to their counterparts in the first embodiment and the second embodiment are given the same reference characters and a description thereof is appropriately omitted.

FIG. 8 is a function block diagram for illustrating the controller group forming the control functions of the hydraulic excavator according to the present embodiment.

In FIG. 8, the controller group of the hydraulic excavator 100 is formed of a main controller 110A, a terrain profile and posture measurement controller 120B, a terrain profile measurement controller 120C, a posture measurement controller 130A, the machine body state monitoring controller 140, the hydraulic equipment controller 160, and the engine controller 170. The controllers 110A, 120B, 140, 160, and 170 forming the controller group are connected to one another via the machine body control communication line 200. The controllers 120B, 120C, and 130A are connected to one another via a terrain profile and posture communication line 202.

The terrain profile and posture measurement controller 120B includes a terrain profile and posture temporary storage device 121B. The terrain profile and posture temporary storage device 121B saves the computation result transmitted from the terrain profile data compression section 113 of the terrain profile measurement controller 120C and the computation result transmitted from the posture computation section 131 of the posture measurement controller 130A via the terrain profile and posture communication line 202.

To the main controller 110A, a remote operation communication device 240 is connected.

The remote operation communication device 240 includes a dedicated power supply 241, a transmission timing determination section 242, and a communication antenna 243.

The dedicated power supply 172 of the remote operation communication device 240 supplies, even when the engine 186 is stopped, the electric power to the main controller 110A, the terrain profile and posture measurement controller 120B, the terrain profile measurement controller 120C, the posture measurement controller 130A, the machine body state monitoring controller 140, the hydraulic equipment controller 160, and the engine controller 170.

The remote operation communication device 240 receives an operation lever signal from a remote operation device (not illustrated) provided to operate the hydraulic excavator 100 via the communication antenna 243 and transmits the operation lever signal to the main controller 110A. Moreover, the remote operation communication device 240 transmits an image of a camera (not illustrated) for the remote operation provided to the hydraulic excavator 100 to the remote operation device.

To the remote operation communication device 240, a data external reception device 250 is connected via wireless communication.

The data external reception device 250 includes a communication antenna 251 and an external storage device 252.

The transmission timing determination section 242 of the remote operation communication device 240 executes data aggregation/communication timing determination processing of determining a timing for transmitting the data saved in the storage device 112 of the main controller 110A and transmits, in a case in which the transmission timing is determined to have been reached, the data in the storage device 112 to the external storage device 252 via the wireless communication between the communication antenna 243 and the communication antenna 251.

FIG. 9 is a flowchart for illustrating a processing content of the data aggregation/communication timing determination processing.

In FIG. 9, the transmission timing determination section 242 first determines whether or not there exists the remote lever input of the remove operation device (Step S300).

When a determination result in Step S300 is YES, that is, when the remote lever input exists, the transmission timing determination section 242 finishes the processing.

Moreover, when the determination result in Step S300 is NO, that is, when the remote lever input is absent, the data aggregation processing is executed (Step S310). In the data aggregation processing, the data saved in the terrain profile and posture temporary storage device 121B and the data saved in the state temporary storage device 141 are aggregated in the main controller 110A via the machine body control communication line 200 and the aggregated data is saved in the storage device 112.

When the data aggregation processing in Step S310 is finished, then determination is made whether or not a communication state is good (Step S320).

When a determination result in Step S320 is NO, that is, when the communication state is not good, the transmission timing determination section 242 finishes the processing.

Moreover, when a determination result in Step S320 is YES, that is, when the communication state is good, the data transmission processing is executed (Step S330) and the processing is finished.

Other configurations are similar to those of the first embodiment and the second embodiment.

Also in the present embodiment configured as described above, there can be provided effects similar to those in the first embodiment and the second embodiment.

Moreover, there is provided the communication line such as the terrain profile and posture communication line 202 handling the large capacity data independently of the machine body control communication line 200, hence the terrain profile data in the large capacity does not flow through the machine body control communication line 200 during the operation of the hydraulic excavator 100, and hence the control signal can be communicated at a stable cycle.

Moreover, there is provided the configuration that the data transmission processing is executed in the case in which the remote lever input does not exist and the communication state is good, and hence the information having a high priority such as the camera image and the lever operation amount during the remote operation can stably be communicated.

Moreover, there is provided the configuration that the data transmission processing is not executed in the case in which the communication state is bad even when the remote lever input is absent, and hence it is possible to suppress a delay in the camera image checked when the operator resumes the remote operation at any timing.

Note that, in the present embodiment, the determination is made in the transmission timing determination section 242 according to whether or not there exists the remote lever input when there is determined whether or not the remote operation is being executed, but the configuration is not limited to this example and there may be provided such a configuration that the determination may be made according to, for example, the rotation speed of the engine 186 or a signal of the safety release lever (not illustrated) which is turned on at the time of the operation of the hydraulic excavator 100.

### <Supplementary Notes>

It is to be noted that the present invention is not limited to the embodiments described above, but includes various modification examples and combinations of the embodiments within a scope not departing from the purport of the present invention. Moreover, the present invention is not limited to the form including all of the configurations described in the embodiments described above, but includes a form obtained by partially removing the configurations. Moreover, a part or the whole of each of the configurations, the functions, and the like described above may be implemented through design using, for example, an integrated circuit or the like. Moreover, each of the configurations, the functions, and the like described above may be implemented as software by a processor interpreting and executing a program which implements each function.

### Description of Reference Characters

- 1:: Boom cylinder
- 2:: Boom
- 3:: Arm cylinder
- 4:: Arm
- 5:: Bucket cylinder
- 6:: Bucket
- 7a, 7b, 7c, 7d:: Posture angle sensor
- 100:: Hydraulic excavator
- 101:: Lower travel structure
- 101a:: Travel device
- 102:: Upper swing structure
- 103:: Front work device
- 104:: Swing device
- 105:: Cab
- 110, 110A:: Main controller
- 111:: Data aggregation determination section
- 112:: Storage device
- 113:: Terrain profile data compression section
- 120, 120A:: Terrain profile measurement controller
- 120B:: Terrain profile and posture measurement controller
- 120C:: Terrain profile measurement controller
- 121:: Terrain profile temporary storage device
- 121B:: Terrain profile and posture temporary storage device
- 122:: Terrain profile data compression section
- 123:: Posture temporary storage device
- 130, 130A:: Posture measurement controller
- 131:: Posture computation section
- 132:: Posture temporary storage device
- 140:: Machine body state monitoring controller
- 141:: State temporary storage device
- 142:: Input temporary storage device
- 150:: Operation input controller
- 151:: Input temporary storage device
- 160:: Hydraulic equipment controller
- 160:: Controller
- 170:: Engine controller
- 172:: Dedicated power supply
- 181:: Terrain profile measurement sensor
- 182:: Pressure sensors
- 183:: Engine rotation speed sensor
- 184:: Operation lever
- 185:: Solenoid valves
- 186:: Engine
- 187:: External storage device
- 188:: Dedicated power supply
- 200:: Machine body control communication line
- 201:: Data external transmission line
- 202:: Terrain profile and posture communication line
- 210:: Data external transmission device
- 211:: Dedicated power supply
- 212:: External transmission port
- 220:: Data external reception device
- 221:: External reception port
- 222:: External storage device
- 240:: Remote operation communication device
- 241:: Dedicated power supply
- 242:: Transmission timing determination section
- 243:: Communication antenna
- 250:: Data external reception device
- 251:: Communication antenna
- 252:: External storage device
- 401:: Terrain profile measurement sensor

## Claims

1. A work machine including a machine body and a work device provided to the machine body, the work machine comprising:
an operation input controller that outputs an operation signal for driving the machine body and the work device, according to an operation state of an operation device operated by an operator;
a posture measurement controller that measures, as a time series, posture information relating to the machine body and the work device on a basis of a detection result of a posture sensor;
a terrain profile measurement controller that measures, as peripheral environment information, a terrain profile shape of a periphery of the work machine on a basis of a detection result of a terrain profile sensor;
a machine body state monitoring controller that measures machine body state information indicating a state of the machine body of the work machine on a basis of a rotation speed of a prime mover of the work machine; and
a main controller that is connected to the operation input controller, the posture measurement controller, the terrain profile measurement controller, and the machine body state monitoring controller via a machine body control communication line, wherein
the main controller includes a main storage device and a data aggregation determination section configured to execute aggregation processing for data to be stored in the main storage device,
the terrain profile measurement controller includes a terrain profile temporary storage device that temporarily stores measured terrain profile data, and
the main controller collects, in the data aggregation determination section, the terrain profile data saved in the terrain profile temporary storage device of the terrain profile measurement controller via the machine body control communication line, in a case in which a condition set in advance is satisfied, and stores the terrain profile data in the main storage device.

2. The work machine according claim 1, wherein
the terrain profile measurement controller includes a terrain profile data compression section configured to calculate an interference area between the work device and a terrain profile from a time series change in a posture measured by the posture measurement controller, and to save only the interference area out of the terrain profile shape measured as the peripheral environment information, to thereby compress the peripheral environment information.

3. The work machine according claim 2, wherein
the work machine further includes an external communication device connected to the main controller, and
the external communication device includes a communication timing determination section that controls a timing for transmitting the data saved in the main storage device, and
a dedicated power supply that supplies electric power for driving the external communication device independently of an activation state of the engine.

4. The work machine according claim 1, wherein
the main controller collects, in the data aggregation determination section, the terrain profile data saved in the terrain profile temporary storage device of the terrain profile measurement controller via the machine body control communication line, in a case in which the operation device is not being operated or in a case in which a safety device that restricts operation of the work machine is effective, and to cause the collected terrain profile data to be stored in the main storage device.
